# EUROPÄISCHE PATENTSCHRIFT

(11) **EP 0 650 611 B1**
(45) Veröffentlichungstag und Bekanntmachung des Hinweises auf die Patenterteilung: **27.03.1996**
(21) Anmeldenummer: 93912647.0
(22) Anmeldetag: 25.06.1993
(51) Int. Cl.: G06F 3/023

(54) **STEUERUNG VON EINGABEGERÄTEN ÜBER EINE TASTATURSCHNITTSTELLE**
CONTROL OF INPUT DEVICES VIA A KEYBOARD INTERFACE
COMMANDE D'APPAREILS DE SAISIE DE DONNEES AU MOYEN D'UNE INTERFACE DE CLAVIER

(30) Priorität: 17.07.1992 DE 4223674
(43) Veröffentlichungstag der Anmeldung: 03.05.1995
(73) Patentinhaber: Siemens Nixdorf Informationssysteme Aktiengesellschaft, D-33102 Paderborn (DE)
(72) Erfinder: HOFFMANN, Stefan, D-1000 Berlin 41 (DE); KOEPPEN, Rüdiger, D-1000 Berlin 62 (DE); KOCHMANN, Michael, D-1000 Berlin 28 (DE)
(74) Vertreter: Fuchs, Franz-Josef, Dr.-Ing.
(86) Internationale Anmeldenummer: DE9300585
(87) Internationale Veröffentlichungsnummer: WO9402892

(56) Entgegenhaltungen:
- EP-A- 0 441 032
- US-A- 4 774 689

## Beschreibung

Die Erfindung betrifft den Anschluß von Eingabegeräten an Personal Computer über eine bereits vorhandene Tastaturschnittstelle.

Personal Computer besitzen zur Dateneingabe in der Regel eine Tastatur, für die sich eine Standard-Schnittstelle durchgesetzt hat, wie sie z.B. im IBM Personal System/2 Technical Reference Manual beschrieben ist. In vielen Einsatzbereichen sind zusätzliche Eingabegeräte notwendig, z.B. Lesegeräte für Magnetkarten, häufig aus Kostengründen mit einer speziellen, zeitkritisch zu bedienenden, Schnittstelle ausgestattet sind. Bislang müssen für diese Eingabegeräte am Personal Computer zusätzliche Schnittstellen benutzt werden, beispielsweise serielle Schnittstellen nach dem V.24-Standard. Beim Einsatz von Personal Computern als Steuereinheiten in Kassenterminals beispielsweise entsteht dadurch jedoch ein Zusatzaufwand für die Schnittstelle im Rechner und die Einheit, die die vom Magnetkartenleser gelieferten Daten in das der seriellen Standard-Schnittstelle, im Beispiel die V.24-Schnittstelle, umsetzt und die Zeitbedingungen erfüllt.

Eine Tastatur mit angeschlossenen Peripheriegeräten ist in dem Artikel "Mehr als eine Tastatur" von M. Güntner und W. Kredler, Elektronik Heft 21 1987, S. 126 bis 130 beschrieben. Die Übertragung der Daten von den Peripheriegeräten erfolgt dabei offenbar über die serielle V24-Schnittstelle.

Eine Übertragung über die Tastaturschnittstelle ist nicht beschrieben. Würde man dennoch so verfahren, ergäbe sich das Problem, daß der im PC enthaltene Tastaturcontroller nur solche Tastencodes weitergibt, die zu zuvor definierten Tasten gehören. Damit sind nicht alle Daten aus dem Magnetstreifen übertragbar, ohne den Tastaturcontroller zu modifizieren oder durch die in dem Artikel vorgeschlagene Mehrzeichen-Darstellung die Datenrate zu reduzieren. Insbesondere in letzterem Fall sind diese Daten dann durch Tastenbetätigungen ersetzbar. Es ist jedoch aus Gründen der Zuverlässigkeit und insbesondere in Abrechnungssystemen wünschenswert, daß die Daten des Peripheriegeräts eindeutig als solche erkennbar sind und nicht durch Tastenanschläge nachgebildet werden können.

Es ist Aufgabe der Erfindung, Eingabegeräte an der Tastatur eines Personal Computers zu betreiben, die ohne Umprogrammierung des Tastaturcontrollers im Personal Computer eine Übertragung aller Codezeichen eines Peripheriegeräts ermöglicht und dennoch nicht das Datenvolumen erhöht. Wünschenswert ist ferner, daß eine Simulation des Eingabegeräts durch Tastenbetätigung augeschlossen und eine Statusabfrage und Steuerung der Eingabegeräte möglich ist.

Die vorliegende Erfindung löst diese Aufgabe dadurch, daß das oder die zusätzlichen Eingabegeräte an den Tastatur-Prozessor angeschlossen werden und ihre Daten über die Tastaturschnittstelle senden. Die Daten des Eingabegeräts werden im Tastaturprozessor zwischengespeichert und an den PC geschickt. Zudem werden die Codes der Eingabegeräte in normale Tastencodes umgesetzt, so daß keine Änderungen am Tastaturcontroller im Personal Computer notwendig sind. Die Daten des Eingabegeräts werden durch Scheintastencodes eingeleitet, die auf den benutzten Tastaturen nicht erzeugt werden können; damit kann ein Benutzer die Daten der Eingabegeräte nicht durch Tastaturbetätigung verändern oder ersetzen. Es werden aber Tastencodes verwendet, die möglichen Tasten entsprechen, so daß der Tastaturcontroller im Personal Computer nicht umprogrammiert zu werden braucht. Daher werden auch die Binärdaten des Magnetkartenlesers in mögliche Tastencodes umgesetzt. Um die Daten des Magnetkartenlesers von denen der Tasten abzutrennen, ist ein Gerätetreiber oder residentes Filterprogramm notwendig, jedoch keine Umprogrammierung des Tastaturcontrollers.

Im folgenden wird die Erfindung an zwei Ausführungsbeispielen erläutert.

Es zeigen
Fig. 1 den Aufbau eines Personal Computer mit zwei angeschlossenen Eingabegeräten,
Fig. 2 den Anschluß des Eingabegeräts über eine eingeschleifte Ansteuerlogik und
Fig. 3 die Struktur der Software im Personal Computer.

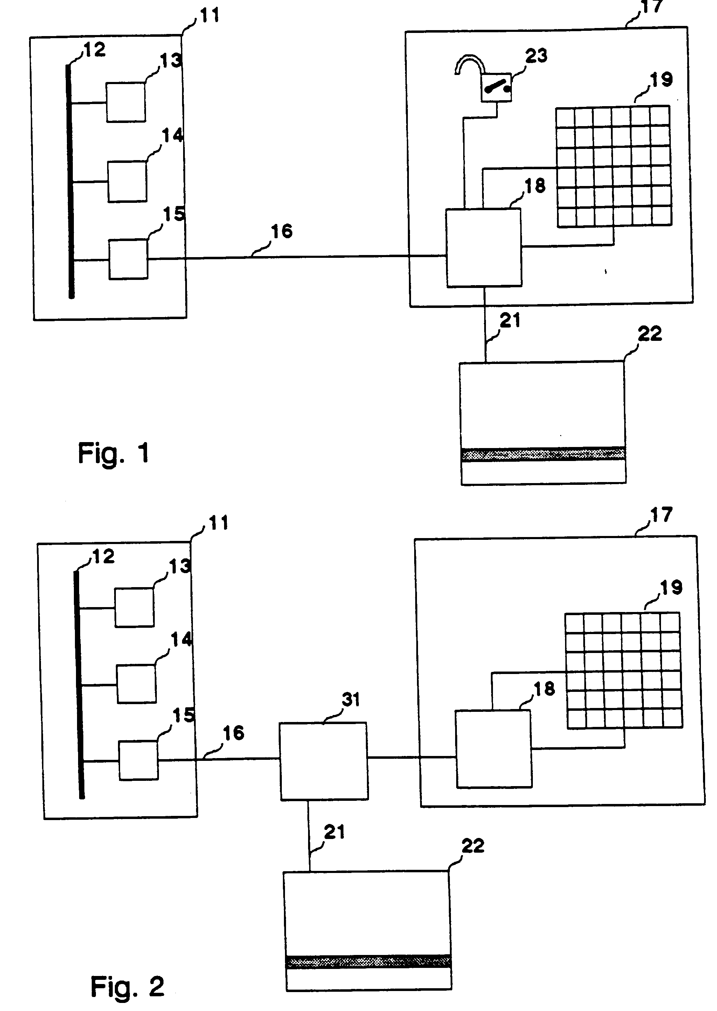

In Fig.1 ist ein üblicher Personal Computer 11 symbolisiert mit einem Bus 12, einer CPU 13, weiteren Speicher- und Peripherieelementen, die zur besseren Übersicht in dem Symbol 14 zusammengefaßt sind, und dem Tastaturcontroller 15 (z.B. Intel 8042), der über eine Datenverbindung 16 mit der Tastatur 17 verbunden ist. In der Tastatur 17 ist ein Tastaturprozessor 18 enthalten (z.B. Intel 8052), der mit dem Tastenfeld 19, meist in Matrixform realisiert, verbunden ist. Der Tastaturprozessor 18 erkennt Tastenbetätigungen des Tastenfelds 19 und sendet entsprechende Codes über die Datenleitung 16 zum Tastaturcontroller 15 im Personal Computer, von dem die Daten durch Programme im Speicher 14, die von der CPU 13 ausgeführt werden, abgerufen werden. Zu Initialisierungs-, Steuerungs- und Diagnosezwecken kann der Tastaturcontroller 15 im Personal Computer auch Daten zum Tastaturprozessor 18 in der Tastatur senden. Die hierbei verwendeten Verfahren und Methoden sind gleichfalls beispielsweise im IBM Personal System/2 Technical Reference Manual beschrieben. Dabei ist zu beachten, daß die von und zu der Tastatur gesendeten Codes ein oder mehrere Bytes umfassen können.

Gegenüber einem herkömmlichen Personal Computer sind in Fig.1 zwei Eingabegeräte ergänzt. Eines ist ein Magnetkartenleser 22 ('swipe card reader', SCR), der über eine für dieses Gerät spezifische Schnittstelle 21 an den Tastaturprozessor 18 angeschlossen ist. Das zweite ist ein durch Schlüssel betätigter Schalter 23.

Im Tastaturprozessor 18 wird wie folgt verfahren: Nach dem Einschalten oder Rücksetzen durch Übertragung des Code 'FF' vom Personal Computer zur Tastatur ist der Magnetkartenleser 22 gesperrt. Er wird erst freigegeben, wenn nach dem im folgenden als Pseudocode dargestellten Ablauf der Personal Computer den Code 'D0' sendet:

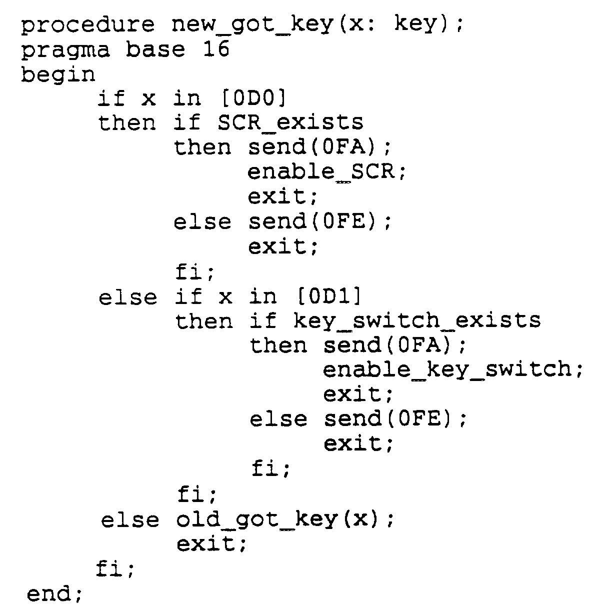

Es wird dabei der Wiederholungscode 'FE' zurückgesendet, wenn kein Magnetkartenleser vorhanden ist; dieser Code wird immer bei unbekannten Befehlen benutzt und hat ansonsten die Bedeutung "Übertragung wiederholen". Ist dagegen ein Magnetkartenleser vorhanden, so wird der Quittungscode 'FA' zurückgesendet, der die Bedeutung einer positiven Quittung ("acknowledge") hat.

Danach werden vom Magnetkartenleser geliefert Daten in einen internen Speicher des Tastaturprozessors 18 abgestellt. Sind die Daten vollständig, ist keine Tastaturbetätigung auf der Tastenmatrix 19 aktiv und keine Nachricht vom Personal Computer zur Tastatur oder von der Tastatur zum Personal Computer im Übertragungszustand, dann sendet der Tastaturprozessor die Daten. Dabei wird zunächst ein Scheintastencode übertragen, der vom Tastaturcontroller 15 als erlaubter Tastencode erkannt und verarbeitet wird, dem aber auf der angeschlossenen Tastatur keine Taste zugeordnet ist, z.B. '65'. Der Ablauf der Übertragung lautet in Pseudocode folgendermaßen:

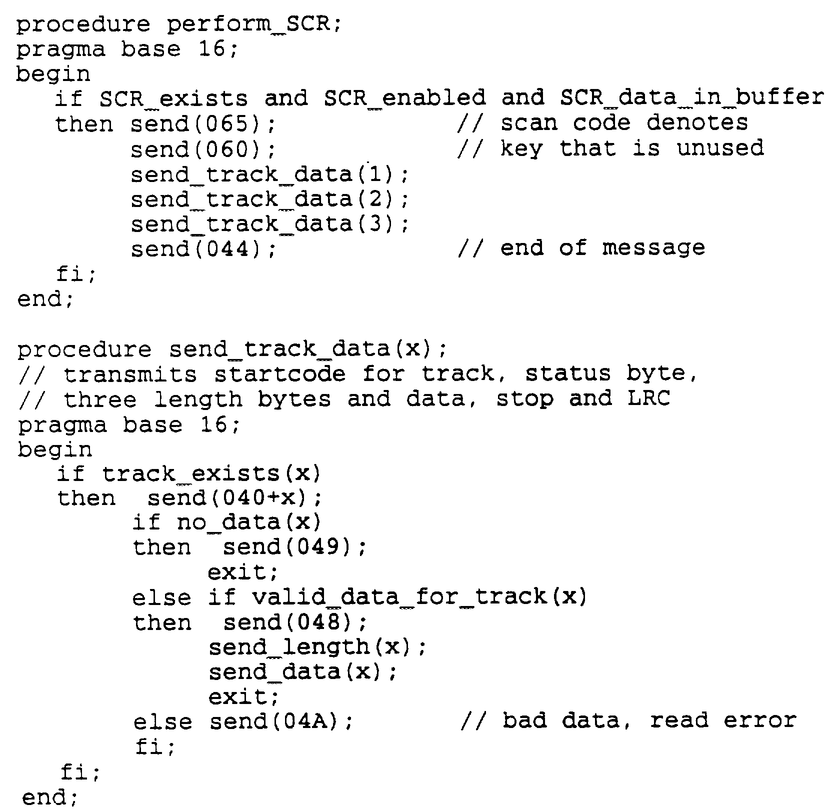

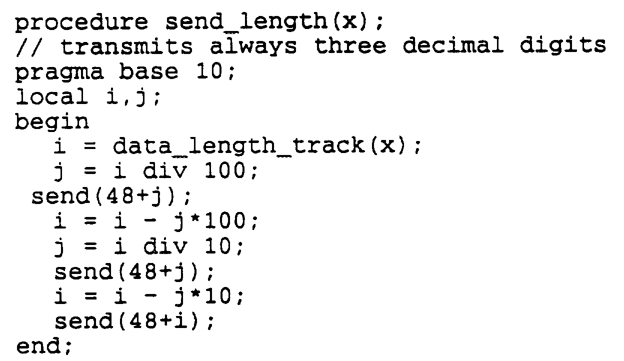

Das Übertragungsformat lautet also:
Start,
SpurNr1, Status, Anzahl, Daten,
SpurNr2, Status, Anzahl, Daten,
SpurNr3, Status, Anzahl, Daten, Ende

Die einzelnen Teile des Übertragungsformats sind dabei wie folgt definiert:
Start: '65H', '60H'
SpurNrl:'41H' Kennzeichnung für Daten von Spur 1
SpurNr2:'42H' Kennzeichnung für Daten von Spur 2
SpurNr3:'43H' Kennzeichnung für Daten von Spur 3
Ende: '44H' Kennzeichen für das Ende der Daten vom SCR
Status: '48H' alles ok
   '49H' Startzeichen nicht gefunden, keine Daten übertragen
   '4AH' LRC-Zeichen falsch, keine Daten übertragen
   '4BH' Parity-Fehler, keine Daten übertragen
Anzahl: '3XH', '3XH', '3XH' Anzahl gelesener Bytes
   Beispiel: '30H', '38H', '32H' = 82 Byte
Daten: Daten mit Endezeichen und LRC ohne Startzeichen

Ein Beispiel für die Übertragung lautet:
Daten auf der Karte:
Spur1: leer
Spur2: 9 Byte Daten: 00, 03, 05, 07, 01, 08, 09, 00, 02 Ende-Byte: OF, LRC: 07
Spur3: nicht mit Magnetkopf bestückt

Die Tastatur muß dazu folgende Daten ausgeben:

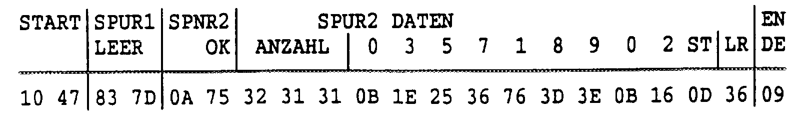

Folgende Daten kommen im System an (Ausgang des Keyboard-Controllers 15):

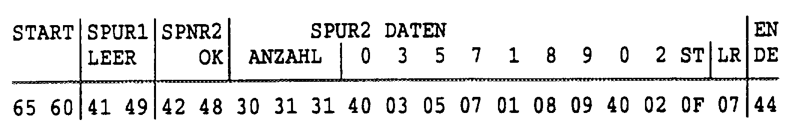

Dabei werden die Daten nach der weiter hinten folgenden Tabelle 1 codiert.

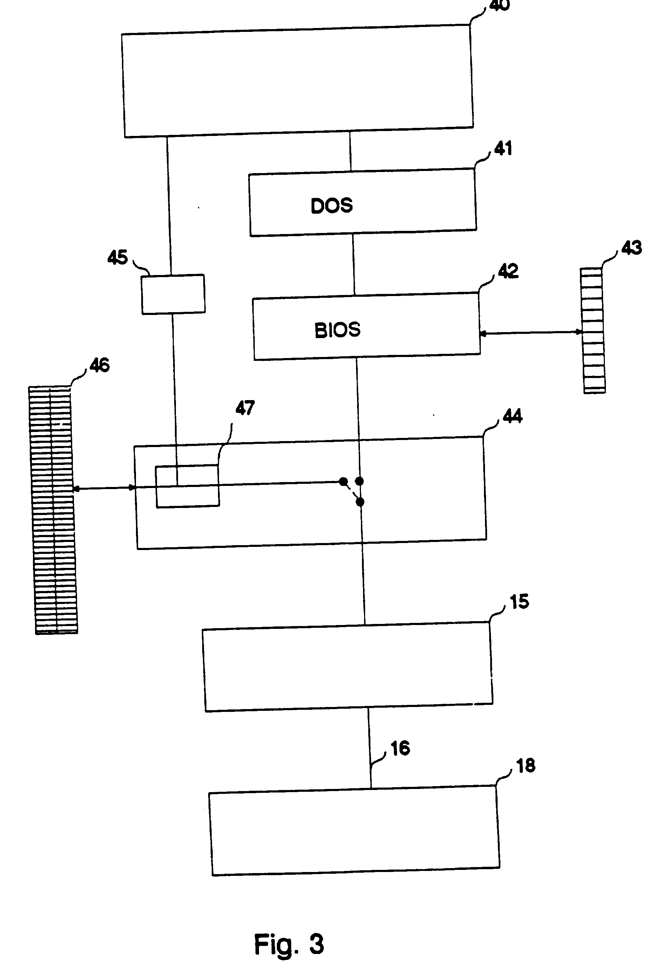

Die entsprechende Verarbeitung im Personal Computer ist in Fig. 3 dargestellt. Ein Anwendungsprogramm 40, das Tastatur- und SCR-Daten verarbeitet, benutzt zunächst die normale Schnittstelle zur Tastaturbehandlung 41 im Betriebssystem (DOS), welche insbesondere eine Schnittstelle zur Firmware 42 des Rechners (BIOS) besitzt, welches Tastaturdaten aus einem Puffer 43 entnimmt, der mit den Daten aus dem Tastaturcontroller 15 befüllt wird. Zur Benutzung des SCR wird ein Gerätetreiber 44 installiert und eine neue Software-Schnittstelle 45 bereitgestellt. Der Gerätetreiber 44 übernimmt nun die Daten des Tastaturcontrollers 15 und gibt sie normalerweise unverändert an das BIOS weiter. Durch einen Auftrag auf der Schnittstelle 45 aktiviert der Gerätetreiber 44 den Tastaturprozessor 18, indem er, wie oben beschrieben, den Code 'D0' sendet. Daten des Magnetkartenlesers beginnen mit dem Code '65', wie ebenfalls oben beschrieben. Dieser Code wird vom Gerätetreiber 44 ausgewertet und führt dazu, daß alle nachfolgenden Daten bis einschließlich des Endezeichens in einem zweiten, größeren Puffer 46 abgestellt und nicht zum BIOS 42 weitergeleitet werden. Nachfolgende Daten, die Tastaturbetätigungen tatsächlich vorhandener Tasten entsprechen, werden wieder unverändert zum BIOS weitergeleitet. Die Daten des Magnetkartenlesers werden vor oder nach dem Puffern durch eine Codierstation 47 in den Originalcode zurückübersetzt und dem Anwenderprogramm 40 über die Schnittstelle 45 übermittelt.

Als weiteres Eingabegerät ist in Fig. 1 ein Schlüsselschalter 23 dargestellt, wobei die gewöhnlich mehreren Stellungen nicht dargestellt sind. Jeder Wechsel der Stellung wird als Funktionstastenbetätigung codiert, nämlich als Loslassen (Break) der bisherigen Stellung und Betätigen (Make) der neuen Stellung übertragen. Die Erfassung des Schlüsselschalters wird durch den Code 'D1' freigegeben. Der

Make-Code der entsprechenden Taste wird gesendet, so daß durch erneutes Freigeben die Stellung abgefragt werden kann. Eine mögliche Codierung für mehrere Stellungen ist in Tabelle 2 dargestellt. Dieses Verfahren ist auch für die Zustandsübermittlung für den Magnetkartenleser geeignet, wenn dessen Schnittstelle (21) entsprechende Zustandsinformation bereitstellt.

In Fig. 2 ist der Magnetstreifenleser 22 nicht an den Tastaturprozessor 18, sondern an eine eigene Ansteuerlogik 31 angeschlossen, die in der Regel die Daten unverändert von und zum Tastaturprozessor 18 übermittelt. Lediglich werden die zuvor beschriebenen Verfahren, die den Magnetkarteleser 22 betreffen, durch die Ansteuerlogik 31 durchgeführt.

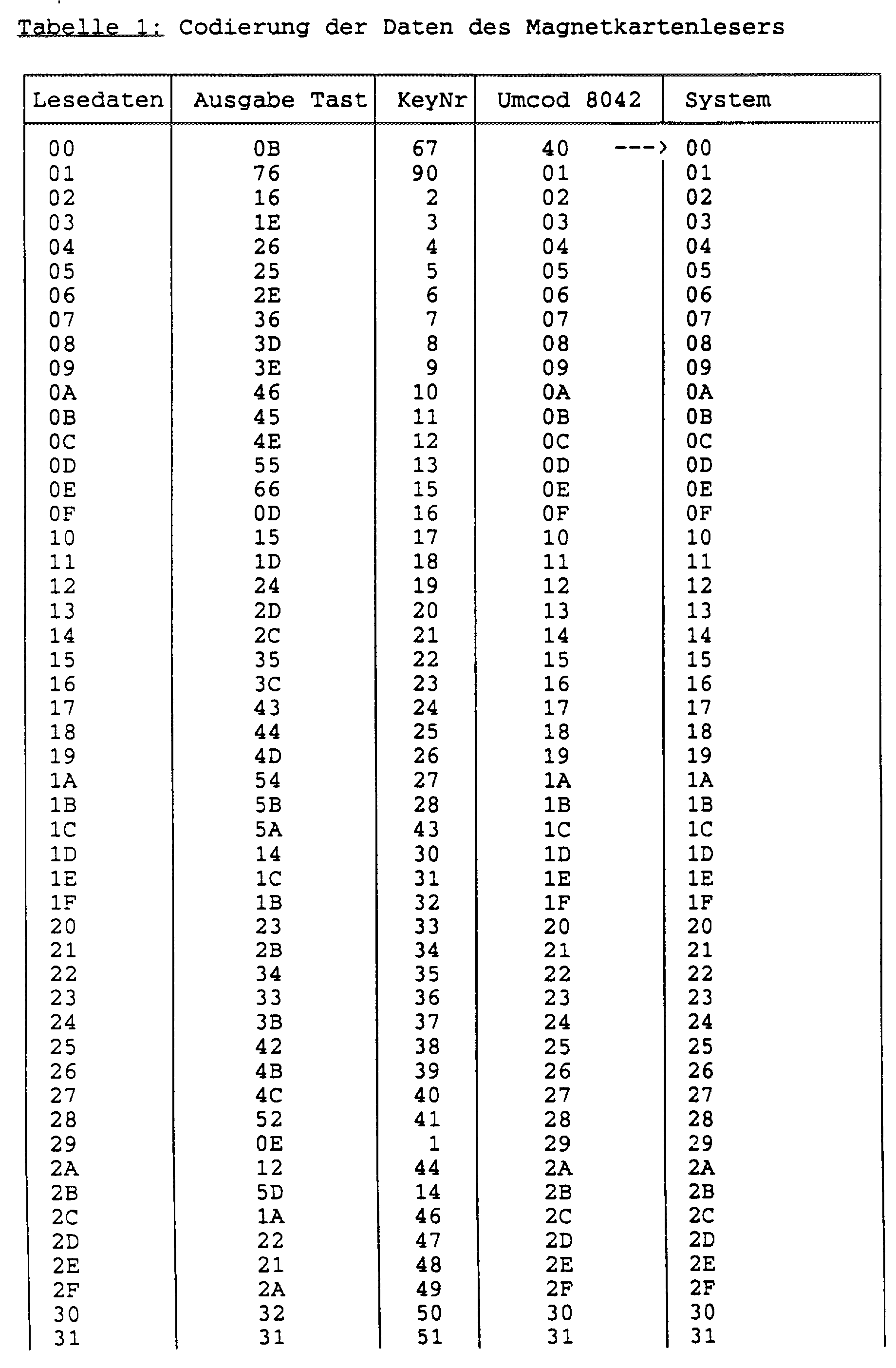

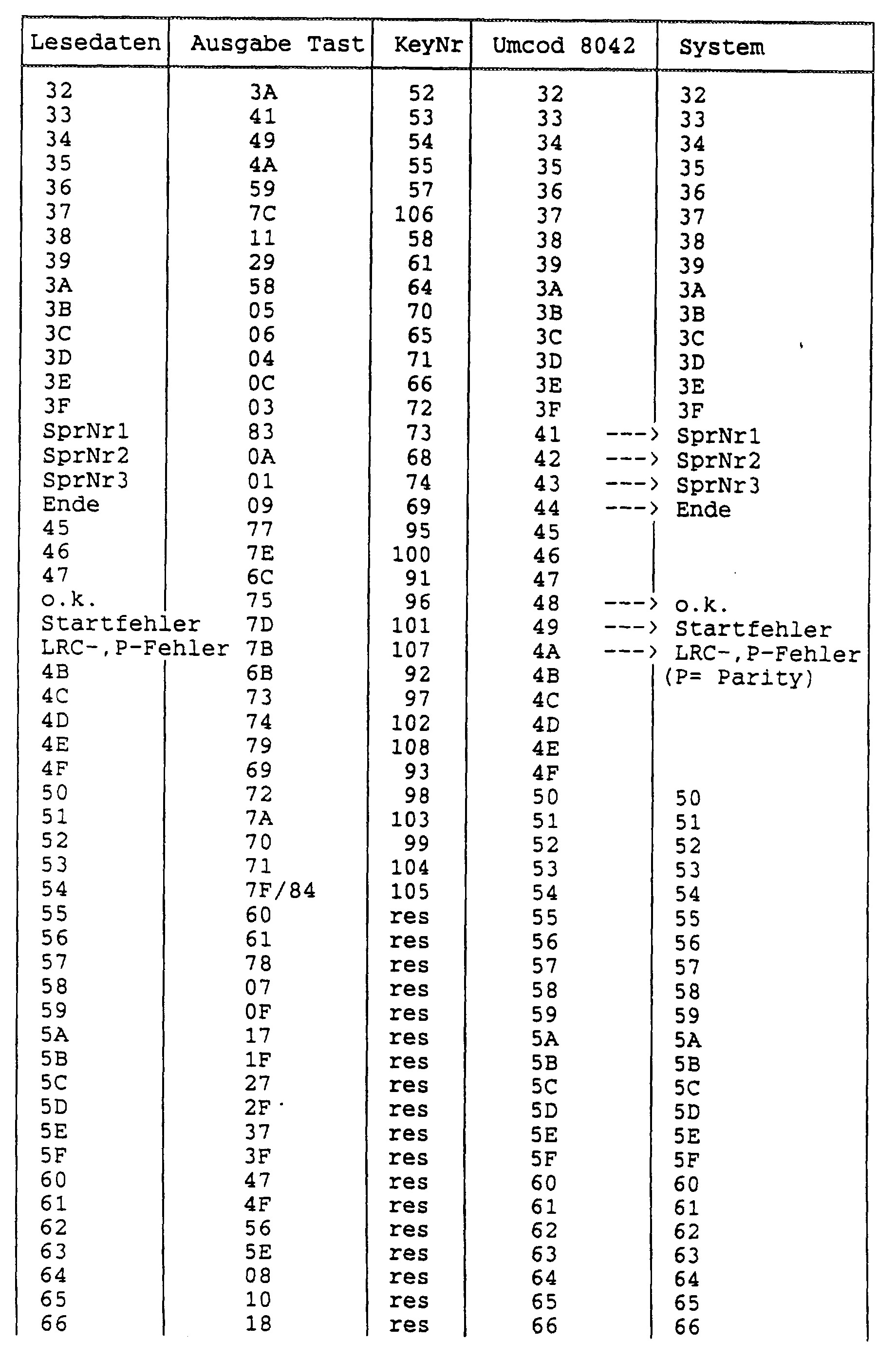

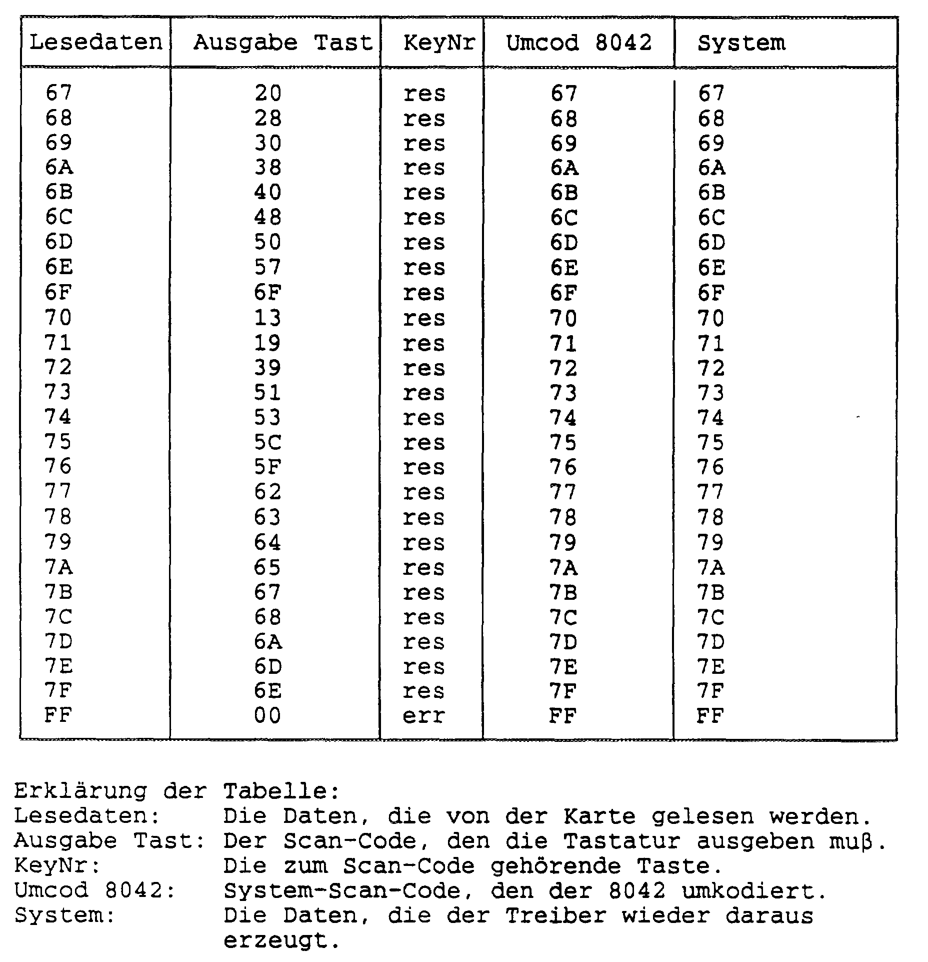

**Tabelle 2:**

| Codierung der Daten eines Schlüsselschalters | | |
|---|---|---|
| Schlüsselposition | Make | Break |
| 1 | 10, 51 | 10, F0, 51 |
| 2 | 10, 52 | 10, F0, 52 |
| 3 | 10, 53 | 10, F0, 53 |
| 4 | 10, 54 | 10, F0, 54 |
| 5 | 10, 55 | 10, F0, 55 |
| 6 | 10, 56 | 10, F0, 56 |

## Patentansprüche

1. Verfahren zum Betreiben eines Eingabegeräts (22, 23) an einer einem Personal Computer (11) mit einem Tastaturcontroller (15) über ein Datenübertragungsmittel (16) angeschlossenen Tastatur (17), welche einen Tastaturprozessor (18) aufweist, mit den Merkmalen:
- Der Tastaturprozessor (18) sendet Tastencodes an den Personal Computer, wobei der Tastaturcontroller (15) vorherbestimmte unzulässige Codes abweist und nur zulässige Codes weiterleitet.
- Ein Teil der zulässigen Codes sind Scheintastencodes, die durch Betätigung der Tasten der Tastatur nicht erzeugt werden können.
- Die Daten des Eingabegeräts werden in zulässige Codes umgesetzt.
- Der Tastaturprozessor (18) sendet bei oder nach Betätigung des Eingabegeräts (22, 23) einen Scheintastencode, der die nachfolgenden Daten als vom Eingabegerät (22, 23) stammend kennzeichnet.

2. Verfahren nach Anspruch 1 mit folgenden zusätzlichen Merkmalen:
- Der Tastaturcontroller (15) kann dem Tastaturprozessor (18) Befehlscodes senden.
- Der Tastaturprozessor (18) sendet vom Eingabegerät (22, 23) jeweils bereitgestellte Daten selbsttätig, sofern diese Betriebsart durch einen einen Freigabecode darstellenden Befehlscode angefordert wurde.

3. Verfahren nach Anspruch 2 mit folgenden zusätzlichen Merkmalen:
- Bei angeschlossenem oder betriebsbereitem Eingabegerät (22, 23) antwortet der Tastaturprozessor (18) auf den Freigabecode mit einem Quittungscode, der gleich dem Quittungscode bei fehlerfreier Ausführung anderer Befehlscodes ist.
- Bei nicht angeschlossenem oder auch nicht betriebsbereitem Eingabegerät (22, 23) antwortet der Tastaturprozessor (18) mit einem Wiederholungscode, der gleich dem Wiederholungscode nach Übermittlung undefinierter Befehlscodes ist.

4. Verfahren nach Anspruch 1 mit folgenden zusätzlichen Merkmalen:
- Das Eingabegerät (22, 23) weist unterschiedliche Betriebszustände auf, wobei ein Betriebszustandswechsel durch Übertragung eines Scheintastencodes übertragen wird.

5. Verfahren nach einem der Ansprüche 2 oder 3 mit folgenden zusätzlichen Merkmalen:
- Das Eingabegerät (22, 23) weist unterschiedliche Betriebszustände auf, wobei ein Betriebszustandswechsel durch Übertragung eines Scheintastencodes übertragen wird.
- Wird ein Freigabecode verwendet, so wird der Zustand des Eingabegeräts (22, 23) übermittelt, indem Scheintastencodes gesendet werden, die einem Zustandswechsel in den tatsächlich vorhandenen Zustand entsprechen.

## Claims

1. Method for operating an input device (22, 23) at a keyboard (17) connected to a personal computer (11) having a keyboard controller (15) via a data transmission means (16), which keyboard has a keyboard processor (18) having the features:
- the keyboard processor (18) sends key codes to the personal computer, the keyboard controller (15) rejecting any predetermined impermissible codes and only forwarding permissible codes;
- some of the permissible codes are dummy key codes which cannot be generated by operating the keys of the keyboard;
- the data of the input device are converted into permissible codes;
- at the same time as or after the operation of the input device (22, 23), the keyboard processor (18) sends a dummy key code which identifies the following data as originating from the input device (22, 23).

2. Method according to Claim 1, having the following additional features:
- the keyboard controller (15) can send command codes to the keyboard processor (18);
- the keyboard processor (18) automatically sends data provided by the input device (22, 23) in each case, provided that this operating mode was requested by a command code representing an enable code.

3. Method according to Claim 2, having the following additional features:
- when an input device (22, 23) is connected or operational, the keyboard processor (18) responds to the enable code with an acknowledgement code which is the same as the acknowledgement code for error-free execution of other command codes;
- when an input device (22, 23) is not connected or else is not operational, the keyboard processor (18) responds with a repeat code which is the same as the repeat code after transmission of undefined command codes.

4. Method according to Claim 1, having the following addition features:
- the input device (22, 23) has different operating statuses, a change of operating status being transmitted by transmission of a dummy key code.

5. Method according to one of Claims 2 or 3, having the following additional features:
- the input device (22, 23) has different operating statuses, a change of operating status being transmitted by transmission of a dummy key code;
- if an enable code is used, then the status of the input device (22, 23) is transmitted, in that dummy key codes that correspond to a status change to the actually existing status are sent.

## Revendications

1. Procédé pour faire fonctionner un appareil d'introduction (22,23) sur un clavier (17), qui est connecté par l'intermédiaire de moyens (16) de transmission de données à un ordinateur personnel (11) comportant un dispositif de commande de clavier (15) et qui comporte un processeur de clavier (18), présentant les caractéristiques suivantes :
- le processeur de clavier (18) envoie des codes de touches à l'ordinateur personnel, le dispositif de commande de clavier (15) rejetant des codes inadmissibles déterminés par avance et ne retransmettant que des codes admissibles;
- une partie des codes admissibles est formée de codes de touches fictives, que l'on ne peut pas produire par actionnement des touches du clavier;
- les données de l'appareil d'introduction sont converties en des codes admissibles; et
- lors de ou après l'actionnement de l'appareil d'introduction (22,23), le processeur de clavier (18) envoie un code de touche fictive, qui caractérise les données suivantes comme provenant de l'appareil d'introduction (22,23).

2. Procédé suivant la revendication 1 présentant les caractéristiques supplémentaires suivantes :
- le dispositif de commande de clavier (15) peut envoyer des codes d'instructions au processeur de clavier (18); et
- le processeur de clavier (18) envoie automatiquement des données tenues prêtes par l'appareil d'introduction (22,23), dans la mesure où ce type de fonctionnement a été demandé par un code d'instruction représentant un code d'autorisation.

3. Procédé suivant la revendication 2, présentant les caractéristiques supplémentaires suivantes :
- dans le cas où l'appareil d'introduction (22,23) est raccordé ou est prêt à fonctionner, le processeur de clavier (18) répond au code d'autorisation par un code d'accusé de réception, qui est identique au code d'accusé de réception lors de l'exécution sans erreur d'autres codes d'instructions;
- dans le cas où l'appareil d'introduction (22,23) n'est pas raccordé ou n'est pas prêt non plus à fonctionner, le processeur de clavier (18) répond par un code de répétition, qui est identique au code de répétition après retransmission de codes d'instructions indéfinis.

4. Procédé suivant la revendication 1, présentant les caractéristiques supplémentaires suivantes :
- l'appareil d'introduction (22,23) a des états de fonctionnement différents, un changement d'état de fonctionnement étant transmis par transmission d'un code de touche fictive.

5. Procédé suivant l'une des revendication 2 et 3, présentant les caractéristiques supplémentaires suivantes :
- l'appareil d'introduction (22,23) a des états de fonctionnement différents, un changement d'état de fonctionnement étant transmis par transmission d'un code de touche fictive; et
- si on utilise un code d'autorisation, on transmet l'état de l'appareil d'introduction (22,23) en émettant des codes de touches fictives, qui correspondent à un changement de l'état effectivement présent.
